# DEMANDE DE BREVET EUROPEEN

(11) **EP 2 190 160 A1**
(43) Date de publication de la demande: **26.05.2010**
(21) Numéro de dépôt: 09176493.6
(22) Date de dépôt: 19.11.2009
(51) Int. Cl.: H04L 29/06, G06F 9/445

(54) **Système et procédé pour le déploiement dynamique de traitements distribués**

(30) Priorité: 21.11.2008 FR 0806553
(71) Demandeur: Thales, 92200 Neuilly Sur Seine (FR)
(72) Inventeur: Lopez-Ramos, Mario, 92700, COLOMBES (FR); Leguay, Jeremie, 92700, COLOMBES (FR); Conan, Vania, 92200, COLOMBES (FR)
(74) Mandataire: Dudouit, Isabelle

(57) **Abrégé**

Système permettant le déploiement dynamique et/ou la création de tâches au sein d'un réseau comportant au moins un noeud maître (0) et plusieurs noeuds capteurs Ni ayant des capacités de traitement limitées, le réseau supportant un logiciel de communication exposant les fonctionnalités de chaque noeud capteur comme des services sur ledit réseau et un mécanisme de médiation permettant de mettre en relation les services de différents noeuds capteurs dudit réseau caractérisé en ce qu'il comporte au moins les éléments suivants :
Au niveau d'un noeud Ni de faible capacité du réseau :
- Un gestionnaire de déploiement de tâches (40) ou de traitements,
- Un module de stockage (41) desdites tâches reçues via un gestionnaire de déploiement des tâches (40),
- Un module interpréteur (43) desdites tâches, ledit module utilisant des opérations basiques (44) présentes dans ledit noeud,
- Une interface avec des capteurs locaux (45),
- Un module de communication réseau orienté services (47),
- Un module de médiation globale (46) ,

lesdits différents noeuds capteurs au sein dudit réseau exécutant chacun une ou plusieurs des tâches déployées spécifiques,
Au niveau d'un noeud maître pendant la phase de déploiement :
- Un gestionnaire de déploiement de tâches (56).

Utilisation du système pour la fusion de données.

## Description

L'invention concerne un système et un procédé permettant notamment le déploiement dynamique de tâches ou traitements, tels que des services distribués dans un réseau de capteurs sans fil. Le réseau de capteurs sans fil peut être un réseau ad hoc dans lequel chaque unité, par exemple un noeud communique directement avec son voisin.

L'invention s'applique, notamment, dans des architectures multi-niveaux. Elle est utilisée dans les réseaux filaires ou sans fil, de manière plus générale dans tout réseau comprenant des noeuds ayant des capacités de traitement limitées.

Les réseaux de capteurs sans fils ou en abrégé RCS plus connus sous l'abréviation anglo-saxonne WSN pour Wireless Sensor Networks sont composés de noeuds caractérisés par le fait qu'ils possèdent des capacités de communication radio, des capacités de mesure via l'utilisation de transducteurs ou de modules plus complexes, et des capacités de calcul plus ou moins élevées. Ces noeuds capteurs sont mis en réseau en utilisant le plus souvent des fonctions d'auto-organisation à la manière des réseaux adhoc (plus connus sous la désignation anglo-saxonne MANET RFC2501). Dans ce cas, puisque la communication n'est a priori possible qu'entre les noeuds en portée radio, un protocole de routage connu de l'Homme du métier, assure alors le relayage de paquets de données pour garantir la connectivité de bout en bout lorsque la topologie du réseau le permet. Dans les RCS, les noeuds peuvent être mobiles ou non. Les RCS ont des applications civiles pour la surveillance d'infrastructures critiques (usines classifiées, les ponts), la surveillance environnementale (risque sismique, agriculture, écologie), certaines applications médicales ou pour la logistique, ou encore des applications militaires dans le cadre de missions de surveillance.

Les capacités de traitement des noeuds capteurs rencontrés dans les réseaux RCS peuvent être très hétérogènes en fonction des équipements déployés. Il peut s'agir aussi bien de radars déployables nécessitant des traitements de l'ordre de ceux que l'on trouve sur des gros serveurs, de caméras IP ayant la capacité d'un assistant personnel ou PDA (Personal digital Assistant) ou de petits capteurs appelés « motes » comme les MICAz commercialisé par la société Crossbow, qui sont très limitées en capacités : en puissance de calcul, batteries de faible capacité, en bande passante limitée. Le procédé selon l'invention s'applique notamment aux réseaux RCS ayant de faibles capacités. Ces réseaux RCS sont le plus souvent reliés à un système d'information afin d'assurer la collecte de données, d'effectuer des traitements de fusion de données plus complexes, ou de garantir leur contrôle et leur reconfiguration. Du fait de la complexité et de l'hétérogénéité de ces systèmes d'information, les architectures orientées services, connues sous l'abréviation anglo-saxonne SOA (Service Oriented Architecture) sont de plus en plus populaires et déployées. L'ensemble des principes d'architecture définis dans le cadre des SOA permet de séparer les fonctions en unités distinctes et autonomes, appelées Services, qui peuvent être distribués dans le réseau, combinés, et réutilisés pour créer des applications ou d'autres services. Les avantages majeurs de cette approche sont la modularité, la flexibilité, le faible couplage et l'interopérabilité. Ainsi, l'utilisation de l'approche SOA est particulièrement bien adaptée dans les réseaux RCS. Cependant, alors que les principes d'architecture SOA sont souvent utilisés sur les équipements ayant des capacités au moins de l'ordre de celles d'un PDA, ils sont très peu présents dans les réseaux de capteurs sans fil à très basse capacité. L'expression « très basse capacité » vise dans la présente application des équipements tels que les MICAz équipés d'un microcontrôleur de quelques kilobytes de RAM (i.e 4 kb), d'une interface radio basse consommation, de batteries limitées, par exemple, deux piles R6 ou tout autre type de système présentant des caractéristiques équivalentes. Dans le cadre d'opérations de fusion de données impliquant des RCS composés de noeuds ayant de très faibles capacités, économiser les ressources est vital pour assurer la survie du réseau. Ainsi, afin d'éviter que les capteurs envoient au travers d'un puits les données qu'ils collectent à un centre de fusion situé en dehors du RCS, il est préférable de distribuer au maximum les traitements sur les données afin de réduire les coûts en communication. Le fait de réduire les communications permet principalement de rallonger la durée de vie du réseau RCS en économisant les batteries des noeuds. Par exemple, dans le cadre de la recherche d'un maximum, les capteurs pourront de proche en proche trouver de manière distribuée cette valeur maximale. Les traitements intermédiaires utilisés dans le cadre d'un service de fusion distribué sont limités par la capacité des noeuds qui les accueillent. Ainsi, sur des MICAz, des opérations de filtrage (e.g seuil, filtre de Kalman) d'agrégation (i.e moyenne, somme, max-min), de décisions conditionnelles (i.e, classification hiérarchique) peuvent être réalisées.

Les approches orientées services pour les réseaux de capteurs sans-fil ont été le sujet de plusieurs études. Une spécification connue de l'Homme du métier a défini une couche applicative introduisant le concept de service hébergé. Des passerelles permettent l'interconnexion de réseaux d'équipement Zigbee (http://fr.wikipedia.org/wiki/zigbee) avec le monde des Web Services, notamment une pile protocolaire adaptée pour les services Web DPWS. D'autres auteurs ont proposé un protocole de communication au niveau applicatif appelé µSOA. Ce protocole permet via une passerelle d'accéder à des Web Services embarqués sur des capteurs sans fil. La pile protocolaire WSN-SOA J. Leguay, M. Lopez-Ramos, K. Jean-Marie, V. Conan. An Efficient Service Oriented Architecture for Heterogeneous and Dynamic Wireless Sensor Networks, IEEE SenseApp 2008 a été introduite dans le cadre d'une architecture multi-niveaux orientée service pour les réseaux de capteurs. Cette architecture s'applique aussi bien pour des capteurs ayant des capacités similaires à un PC, un PDA ou à un capteur MICAz. La pile WSN-SOA permet le déploiement de services dans des réseaux à très faibles capacités. Elle permet donc le support d'échanges de données entre capteurs mais n'apporte aucune fonctionnalité spécifique pour la fusion et le déploiement dynamique de services.

Le déploiement dynamique de traitements a lui aussi fait l'objet de propositions. Il est connu d'utiliser un système qui permet de reprogrammer intégralement des capteurs sans-fil en reflashant leur mémoire à distance.

Il est aussi connu un intergiciel pour les RCS permettant l'utilisation d'agents mobiles. Les agents mobiles sont définis sous la forme de programme, ayant une syntaxe d'une complexité semblable à celle de l'assembleur, interprété sur les capteurs. En dépit du fait que cet intergiciel offre une large gamme d'opérations, il prend 3191 octets en mémoire RAM dans les MICAz équipés seulement de 4Kb, ce qui rend sa disponibilité incompatible avec des piles protocolaires orientées services comme celle de WSN-SOA ainsi qu'avec l'implémentation d'opérations servant à la fusion de données.

L'architecture TENET O. Gnawali, B. Greenstein, K. Jang, A. Joki, J. Paek, M. Vieira, D. Estrin, R. Govindan, E. Kohler, The TENET Architecture for Tiered Sensor Networks, In Proc. ACM Sensys 2006 permet de distribuer des traitements aux noeuds capteurs sous la forme de tâches. Cela permet de réduire les coûts de communication en effectuant des prétraitements sur les capteurs ainsi que de supporter des opérations simples de reconfiguration. Cependant, TENET ne permet pas aux capteurs de collaborer entre eux. La pile protocolaire Telnet se limite au déploiement de traitements simples sur les noeuds. Chaque noeud est vu de façon isolé et atomique. Telnet ne permet pas de définir la façon dont les tâches doivent interagir en distribué sur les différents noeuds présentant une faible capacité.

Le système DAViM (a Dynamically Adaptable Virtual Machine for Sensor Networks) proposé par Michiels et al., IEEE DISTRIBUTED SYSTEMS ONLINE, IEEE SERVICE CENTER, NEW YORK, NY, US, vol.8, no.1, 1 janvier 2008, page 1, XP011204623, ISSN: 1541-4922, permet l'exécution en parallèle de plusieurs programmes (ou tâches) et l'ajout à la volée de nouvelles instructions (« operation libraries ») dans la machine virtuelle en fonction des besoins opérationnels. Ce système permet à des développeurs de re-déployer dans le cadre d'opérations de re-configuration des applications très légères. Cette proposition n'aborde pas les aspects de communications entre noeuds capteurs et ne fournit pas de support pour la collaboration.

L'architecture RASA (Resource-Aware Service Architecture for Mobile Services in Wireless Sensor Networks) proposée par Blumenthal et al., COMPUTING IN THE GLOBAL INFORMATION TECHNOLOGY, 2006, ICCGI 2006. INTERNATIONAL MULTI-CONFERENCE ON BUCHAREST, ROMANIA 01-03 AUG.2006, PISCATAWAY, NJ, USA, IEEE, 1 juillet 2006, XP031056602, ISBN: 978-0-7695-2629-4 permet d'injecter du nouveau code à la volée dans un réseau de capteurs sous la forme d' « agents mobiles », des petits programmes qui se propagent de noeud en noeud de façon virale et s'exécutent sur tous les noeuds. Dans un but de réutilisation, les fonctionnalités de base sont séparées en « modules » qui peuvent être enchaînés pour accomplir des tâches (qu'ils nomment « services »). Dans le cas du procédé de la présente invention, les noeuds ont des fonctionnalités hétérogènes (par exemple détection et alerte) et chacun exécute un code différent, tout en collaborant afin de remplir une mission globale unique. L'approche SOA du procédé selon l'invention permet que dans des environnements changeants, des noeuds possédant des fonctionnalités hétérogènes se découvrent et enchaînent dynamiquement leurs fonctionnalités en fonction du contexte afin de remplir une tâche de façon collaborative.

En résumé, l'art antérieur connu du Demandeur ne permet pas de définir de façon simple et flexible la manière d'intégrer et de faire collaborer tous les traitements individuels déployés sur des noeuds capteurs en réseau. En particulier, leurs enseignements ne permettent pas de définir les opérations suivantes :
- de distribuer des traitements impliquant la collaboration des noeuds RCS.
- de faire interopérer des mécanismes de distribution de traitements sur les noeuds RCS avec des mécanismes existants (ou bien faire intéropérer des logiciels existant pour le déploiement dynamique de traitements).

Quelques définitions et rappels utiles à la compréhension de la présente demande de brevet vont être donnés ci-après.

La description vise des architectures multi-niveaux qui permettent d'intégrer toute l'hétérogénéité des capteurs, au sens de capacités variables de traitement, présents dans un système complexe.

Dans l'architecture multi-niveaux, trois catégories de noeuds en fonction de leurs capacités réseaux et de leur disponibilité vont être considérés :
« noeuds à forte capacité » ; ces noeuds ont une grande disponibilité dans la mesure où ils sont en permanence connectés au système d'information. Ils n'ont pas de problèmes d'alimentation et disposent d'une grande capacité de traitement. Comme exemple, on peut citer les serveurs d'information cartographique connectés à des réseaux d'infrastructure) ;
« noeuds à capacité limitée » ; ces noeuds ont des capacités limitées en termes de stockage, de batteries, de puissance de calcul ou de connectivité réseau mais peuvent héberger des systèmes d'exploitation comme le logiciel libre GNU/Linux (*fr.wikipedia.org*/*wiki*/***Linux**)* ou VxWorks *(fr.wikipedia.orglwiki*/***VxWorks**)* et peuvent réaliser des traitements complexes. Il peut s'agir de passerelles, de systèmes capteurs plus ou moins puissants (optroniques, acoustiques,..) ;
« noeuds RCS » ; ces noeuds ont des capacités extrêmement limitées. Ils sont, par exemple, munis de quelques kilooctets de mémoire vive (Random Access Memory) ou RAM, n'ont qu'un micro-contrôleur et utilisent une technologie radio basse consommation comme le standard IEEE 802.15.4. Les MICAz commercialisés par la société Crossbow sont un exemple de matériel que l'on retrouve dans cette catégorie.

L'intégration d'un réseau RCS dans un système complexe se fait par l'utilisation de « noeuds maîtres » pouvant être des « noeuds à forte capacité » ou des noeuds à capacité limitée. Dans un système d'information complexe, un réseau RCS est vu au travers des noeuds maîtres comme un sous-système. Cette terminologie sera utilisée pour décrire l'objet de la présente demande de brevet.

L'idée de la présente invention repose notamment sur le déploiement de manière dynamique des services de fusion de données dans des réseaux de capteurs à faible capacité, dont certains exemples ont été donnés précédemment. Le système présente notamment comme avantage de distribuer des traitements dans un réseau de capteurs sans fil afin de créer un service de fusion optimisée.

L'invention concerne un système permettant le déploiement dynamique et/ou la création de tâches au sein d'un réseau comportant au moins un noeud maître et plusieurs noeuds capteurs Ni ayant des capacités de traitement limitées, le réseau supportant un logiciel de communication exposant les fonctionnalités de chaque noeud capteur Ni comme des services sur ledit réseau et un mécanisme de médiation permettant de mettre en relation les services de différents noeuds capteurs dudit réseau **caractérisé en ce qu**'il comporte au moins les éléments suivants :
Au niveau d'un noeud Ni de faible capacité du réseau :
   - Un gestionnaire de déploiement de tâches ou de traitements,
   - Un module de stockage desdites tâches reçues via un gestionnaire de déploiement des tâches,
   - Un module interpréteur desdites tâches, ledit module utilisant des opérations basiques présentes dans ledit noeud,
   - Une interface avec des capteurs locaux,
   - Un module de communication réseau orienté services, exposant les fonctionnalités internes à d'autres noeuds du réseau en tant que services à travers des interfaces d'entrée et de sortie définies de façon formelle à travers un « contrat d'interface » et permettant de commander lesdits services sur d'autres noeuds,
   - Un module de médiation globale mettant en relation les tâches et services producteurs et consommateurs de données au sein des différents noeuds de façon dynamique, fournissant et consommant un ou plusieurs desdits services à travers le module de communication réseau orienté services,
   lesdits différents noeuds capteurs au sein dudit réseau exécutant chacun une ou plusieurs des tâches déployées spécifiques qui communiquent afin de remplir de façon globale une mission,
Au niveau d'un noeud maître nécessaire uniquement pendant la phase de déploiement :
   - Un gestionnaire de déploiement de tâches.

Le module des opérations basiques d'un noeud Ni du réseau comporte au moins une opération permettant à une tâche exécutée sur ledit noeud de créer dynamiquement un nouveau service qui sera exposé à travers ledit réseau.

Ledit module de médiation globale des services d'un noeud Ni du réseau comporte au moins un module de découverte des nouveaux services offerts par un ou plusieurs des autres noeuds du réseau.

L'invention concerne aussi un système pour la création dynamique de services ou de traitements distribués selon le procédé décrit ci-dessus, **caractérisé en ce qu**'il comporte un outil permettant d'élaborer une description du comportement d'un traitement distribué de façon globale en partant d'une librairie de fonctions basiques et un module transformant ladite description en un ensemble de tâches individuelles destinées à être déployées sur chacun des noeuds capteurs Ni.

Selon une variante de mise en oeuvre au moins un noeud comporte une passerelle de services adaptée à assurer l'interopérabilité entre les tâches s'exécutant sur des noeuds capteurs Ni ayant des capacités de traitement limitées et des services ou tâches s'exécutant sur des noeuds non contraints ou sur un système d'information.

Le système de description globale du traitement distribué et la librairie de fonctions basiques permettent de définir des tâches destinées à des noeuds ayant des capacités de traitement hétérogènes, et le module de déploiement associé permet de déployer des tâches individuelles générées sur des noeuds à capacités hétérogènes, communiquant à travers ladite passerelle de services.

Le système comporte, par exemple, un module de supervision et de gestion des tâches déployées, permettant de simuler, tester, superviser et reconfigurer l'exécution des tâches déployées sur les noeuds capteurs à partir de la description du comportement global du traitement distribué.

Selon un mode de réalisation le module de communication réseau orienté services est une pile de type WSN-SOA.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple de service de fusion distribué,
- La figure 2, différents exemples de technologies orientées services pouvant être utilisées à différents niveaux d'une architecture,
- La figure 3, un exemple de mise en collaboration de ressources capteurs et de traitements dans un système d'information complexe,
- La figure 4, un exemple de déploiement de services
- La figure 5, un exemple de fichier maître,
- Les figures 6, 7 et 8 différents exemples de tâches,
- La figure 9, un exemple d'implémentation du procédé dans les noeuds capteurs avec une pile WSN-SOA et un environnement TinyOS,
- La figure 10, un exemple d'implémentation du procédé dans un noeud maître du réseau,
- La figure 11, un exemple de déploiement distribué de fusion modélisé à partir de chorégraphies et orchestrations.

Afin de mieux faire comprendre le principe mis en oeuvre par l'invention, la description qui suit est donnée à titre illustratif pour un réseau de capteurs sans-fil afin de créer un service de fusion optimisée.

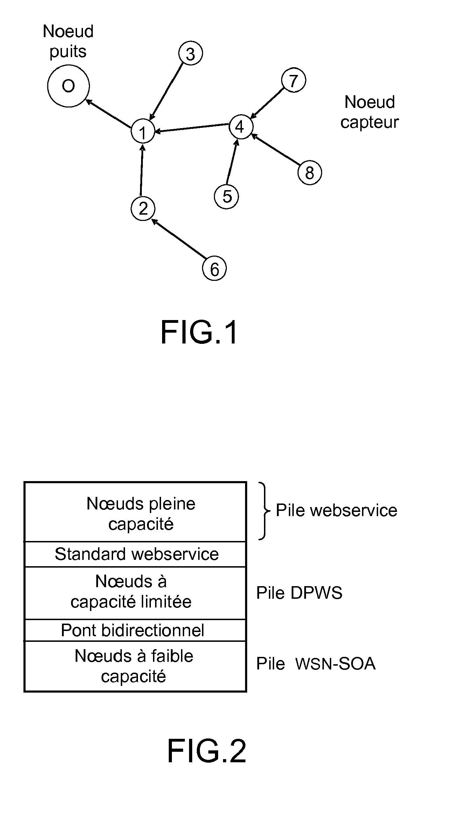

La figure 1 représente un exemple de service de fusion distribué dans un réseau comprenant un noeud maître 0 ou noeud puits et plusieurs noeuds capteurs qui traitent de manière hiérarchique les données mesurées. Dans cet exemple, tous les noeuds Ni, numérotés de 1 à 8 mesurent un paramètre physique, par exemple la température, et se coordonnent pour remonter au noeud puits, aussi appelé noeud maître dans la présente description, la valeur maximale, ceci de manière distribuée. Ainsi, en appliquant un traitement hiérarchique déployé sur tous les noeuds capteurs, le noeud 4 va récupérer les valeurs mesurées par les noeuds 4, 5, 7 et 8 et va reporter au noeud 1 la valeur maximale parmi les valeurs de température mesurées par les noeuds 4, 5 , 7 et 8.

Des services plus complexes peuvent bien entendu être mis en oeuvre. Par exemple, un algorithme de détection distribué basé sur un arbre de décision peut être utilisé. Dans ce cas, les décisions intermédiaires sont prises par les divers noeuds capteurs, ce qui permettra d'aboutir à une décision. Une telle manière de procéder permet d'éviter de nombreuses communications.

La figure 2 représente un exemple d'architecture multi-niveaux et des exemples de technologies orientées services SOA pouvant être utilisées aux différents noeuds de l'architecture. Une pile Web Services peut être implémentée au niveau des noeuds à forte capacité, la pile DPWS (Devices Profile for Web Services) pour les noeuds à capacité limité, la pile WSN-SOA pour les noeuds RCS.

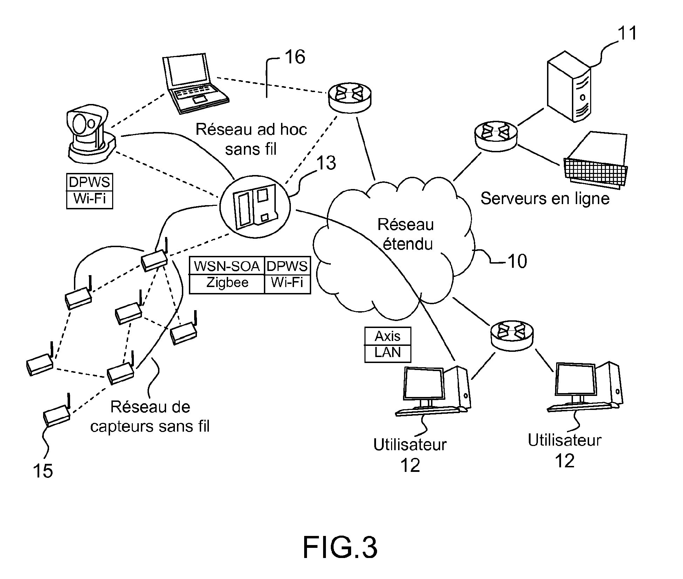

L'architecture présentée à la figure 2 permet la mise en oeuvre de services distribués de fusion impliquant des ressources capteurs et de traitements dans un système d'information complexe comme il est schématisé à la figure 3. Cette figure 3 présente la mise en collaboration de ressources capteurs et de traitements dans un système d'information complexe. Un tel système permet de fusionner des données issues des ressources capteurs.

L'architecture décrite à la figure 3 comprend un réseau étendu 10 ou WAN (wide area network) auquel peuvent être connectés différents éléments, tels que des services en ligne 11, différents utilisateurs 12, des passerelles vers un réseau de capteurs 13, permettant à un réseau de capteurs sans fil 15 de communiquer avec le reste du système d'information. Un réseau ad hoc sans fil 16 est aussi dans cet exemple en liaison avec 13. Les étapes du procédé selon l'invention, permettent à l'utilisateur 12 de mettre en collaboration les ressources hétérogènes du système d'information (capteurs du réseau de capteurs 15, caméra IP par exemple).

Le procédé selon l'invention nécessite un certain nombre de composants logiciels et protocolaires pour fonctionner :

Dans le cas le plus générique, un intergiciel permettant la communication entre les différents noeuds du réseau et les différents éléments mis en oeuvre par le procédé selon l'invention, ainsi qu'un mécanisme de routage permettant de relayer des messages entre les noeuds. L'intergiciel de communication comprend, par exemple, des fonctions permettant les échanges de données, par exemple, par invocation, par abonnement ou encore par publication, la découverte de services, tels que l'annuaire ou le mécanisme de requêtes

Dans une application de type orienté services, le système peut comporter :
- Un intergiciel plus connu sous le terme anglo-saxon « middleware » ayant notamment pour fonction de supporter des services dans le cadre d'une architecture orientée service ;
- Un mécanisme de routage réseau afin de relayer les messages, en multi-sauts radio par exemple ;
- De manière optionnelle, pour des cas d'applications spécifiques, un système de positionnement lorsque les déploiements de tâches doivent être réalisés dans une zone géographique particulière, dans ce cas la position du noeud doit être connue.

L'exemple qui va suivre est donné dans le cadre d'une approche orientée services pour la fusion de données, dans le but de mieux faire comprendre l'invention sans limiter ses applications possibles.

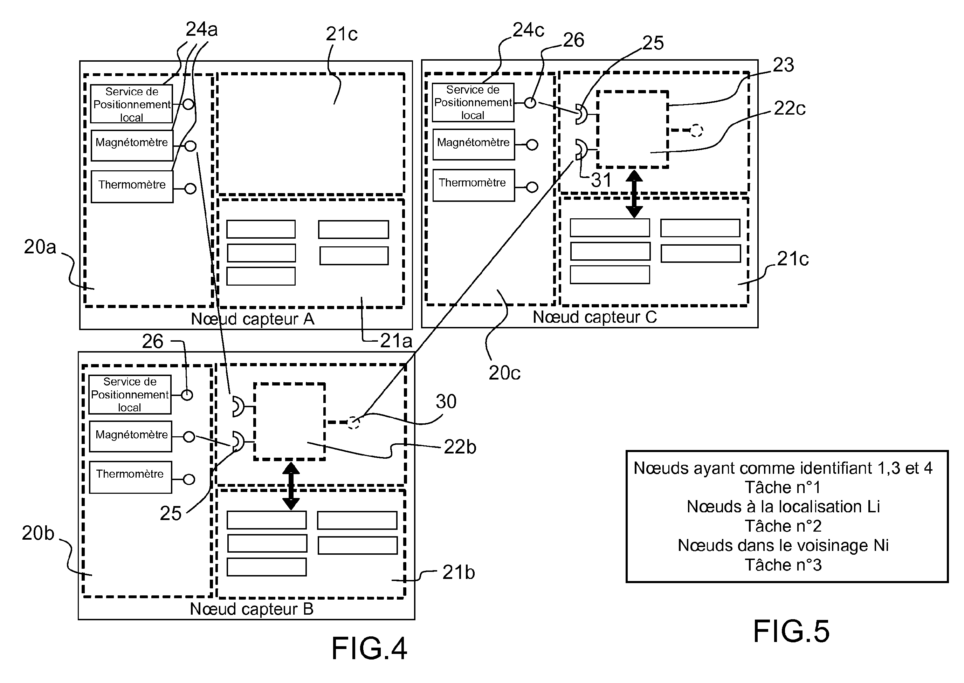

Dans le cadre d'un réseau de type RCS équipé d'un intergiciel orienté service, trois types de composants intervenant dans la création dynamique de services ou de traitements distribués de fusion sont distingués et illustrés à la figure 4 :

Les services capteurs locaux A, B, C : ces services sont disponibles par défaut sur les noeuds. Ils peuvent être fonctionnellement rattachés à des modules capteurs, par exemple des transducteurs. Ces services peuvent être plus ou moins évolués. Ils permettent, par exemple d'obtenir :
- la dernière valeur mesurée par invocation,
- la valeur mesurée en cas de changement significatif en utilisant les capacités de gestion événementielle de l'intergiciel SOA,
- Les opérations basiques 21 a, 21 b, 21 c ; il s'agit par exemple d'une bibliothèque de fonctions et opérations permettant la manipulation ou le traitement des données, par exemple, le filtrage, la moyenne, l'agrégation, la combinaison,
- Les « services déployés 22a, 22b, 22c » ; ces services ou tâches sont des composants déployés sur les noeuds RCS. Ils utilisent les deux types de composants précités, qu'ils soient en local sur le noeud ou sur un noeud distant ; ceci afin de mettre en oeuvre le service distribué de fusion dans le RCS.

La disponibilité de la bibliothèque des « opérations basiques » n'est pas un pré-requis à la mise en oeuvre du procédé. Ceci est fortement dépendant de la nature des traitements qui peuvent être mis en oeuvre au sein des « services déployés ». En revanche, la présence de cette bibliothèque est utilisée lorsque le système d'exploitation sur les noeuds RCS ne permet pas de déployer « à chaud » ou en temps réel du code.

La figure 4 illustre la manière dont ces composants interagissent. Ainsi, un service ou « tâche » de détection 22 déployé sur le noeud capteur C utilise le service de positionnement en local 24, un autre service déployé 22b sur le noeud B, ainsi que des opérations de traitement de données disponibles en local sur le noeud B. De même, le service déployé 22b sur le noeud B utilise le service offrant les ressources du magnétomètre 24a sur le noeud A, ainsi que des opérations de traitement de données disponibles en local.

Les services requis sont schématisés sur la figure par un demi-croissant 25 et les services fournis par un rond 26.

### Découpage en tâches :

Les tâches devant être réalisées par les noeuds capteurs peuvent être assemblées sous la forme de fichier maître dont un exemple est donné à la figure 5. Ce fichier maître permet d'affecter des tâches spécifiques aux noeuds capteurs en fonction de propriétés comme, par exemple, leur identifiant, leur position ou la zone géographique où ils se trouvent.

La description des tâches se fait principalement de deux manières :
- Code à exécuter sur les noeuds RCS si le système d'exploitation tournant sur ces noeuds permet un déploiement à chaud ou en direct du code, ou
- Scripts à interpréter sur les noeuds RCS.

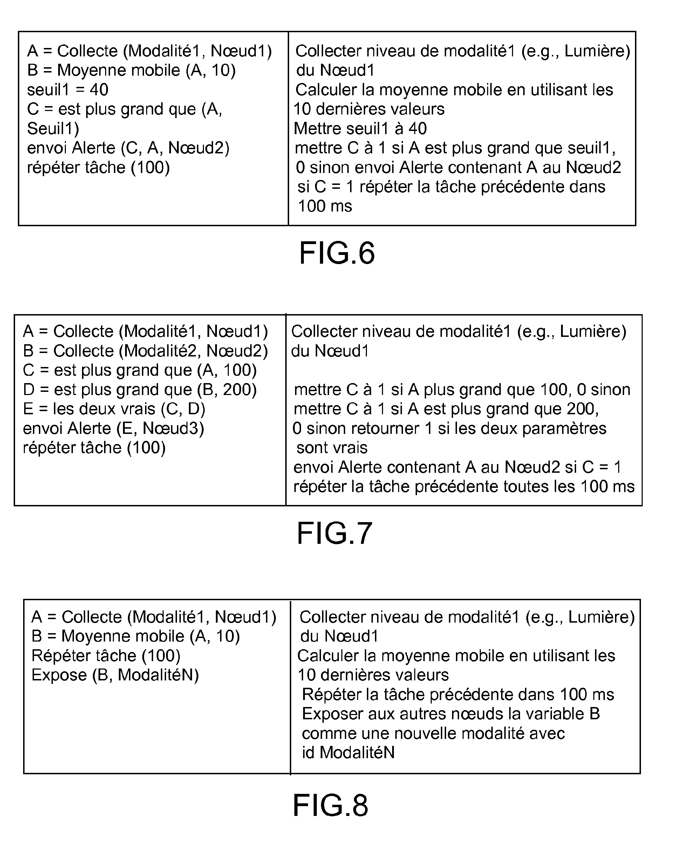

Des exemples de scripts sont donnés aux figures 6, 7 et 8 à titre illustratif. La figure 6 spécifie un script pour l'envoi d'une alerte si une modalité surveillée dépasse un seuil prédéterminé ; la figure 7, l'envoi d'une alerte si deux modalités, ou paramètres, surveillées (e.g., température et lumière) dépassent toutes les deux une valeur seuil. La figure 8 est un exemple de script lorsque l'on souhaite exposer un nouveau service aux autres noeuds capteurs.

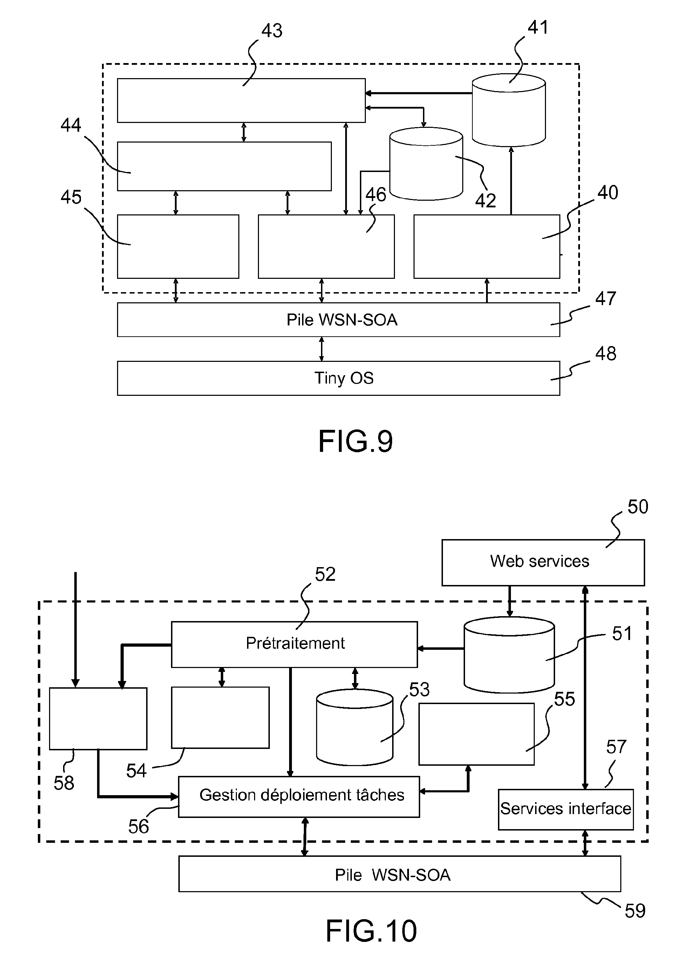

Le système ou dispositif permettant la mise en oeuvre des étapes du procédé décrites ci-avant, et donc la distribution de traitements coopérants distribués dans les réseaux de capteurs sans-fil, par exemple, dans le cadre de l'exemple concernant une approche orientée service, décrit à titre illustratif et nullement limitatif comporte, notamment, les éléments suivants illustrés sur la figure 9 :
40 - Gestionnaire de déploiement de tâches (en anglais, Task deployment manager) : Ce module permet de recevoir en provenance d'une passerelle non représentée sur la figure pour des raisons de simplification (en anglais, sink ou gateway) les tâches à traiter sur un noeud. Il permet de gérer le cycle de vie des tâches déployées. La passerelle permet la communication avec le monde extérieur au système selon l'invention. Une tâche peut se trouver dans différents états au cours de son cycle de vie :
Installée : lorsque le code a été correctement déployé dans le noeud à partir de la passerelle.
Arrêtée : lorsque les éventuelles dépendances face à d'autres services ou composants ont été résolues, mais la tâche n'est pas en cours d'exécution.
Démarrée : lorsque la tâche est en cours d'exécution.
Non installée : lorsque, une fois arrêtée, la tâche est effacée du gestionnaire de déploiement et les ressources associées libérées.
41 - Dépôt de tâches (en anglais, Task repository) : Ce module stocke les différentes tâches reçues via le gestionnaire de déploiement de tâches 40.
42- Mémoire allouée (en anglais, Allocated memory) : Ce module peut être utilisé pour stocker les variables utilisées par les tâches. L'allocation peut se faire dynamiquement mais dans le cadre de l'utilisation de noeuds capteurs a très faible capacité comme les MICAz elle est réalisée de manière statique à priori par le noeud passerelle. Dans ce dernier cas, la taille de la mémoire allouée est bornée par un maximum.
43 - Interpréteur de tâches (en anglais, Task processor) : Ce module gère l'exécution des tâches se trouvant dans le module de dépôt de tâches 41. Il exécute chacune des instructions en faisant appel aux opérations de base 44, en récupérant les valeurs de modalités locales ou distante en provenance des services capteurs locaux 45 du noeud courant ou d'autres noeuds du réseau, en récupérant la valeurs de modalités crées dynamiquement via le gestionnaire de services dynamique 46.
44 - Opérations de base (en anglais, Basic operations) : Ce module contient les opérations de base que les différentes tâches peuvent utiliser de manière séquentielle. Il peut s'agir par exemple d'opérations :
   D'accès à des modalités distantes ou locales
   De détection de seuil
   De filtrage
   D'agrégation
   De décision
   De création de services dynamiques
   Ces opérations, étant connues de l'Homme du métier, ne seront pas réexplicitées dans la présente demande de brevet.
45 - Services capteurs locaux (en anglais, Local sensor services) : Ce module contient l'ensemble des services locaux exposant les modalités disponibles par défaut sur le noeud.
46 - Gestionnaire de services dynamiques ou gestionnaire de médiation globale des services (en anglais, Service broker) : Ce module gère les services créés dynamiquement permettant aux noeuds d'échanger de nouvelles modalités. Ainsi, lorsqu'une nouvelle modalité est rendue disponible par une tâche localement, ce module crée un service permettant aux autres noeuds du réseau de la découvrir et d'y accéder. Le service met notamment en relation les tâches des différents noeuds fournissant et consommant des services à travers le module de communication orienté services 47. Ce module ou gestionnaire comporte au moins un module de découverte des nouveaux services offerts par un ou plusieurs des autres noeuds du réseau.
47 - Un module de communication orienté services exposant les fonctionnalités internes à d'autres noeuds du réseau à travers des interfaces d'entrée et de sortie formellement décrites sous la forme d'un « contrat d'interface » et permettant de commander des services sur d'autres noeuds du réseau. Le module de communication est, dans un exemple d'application non limitatif, une pile de type WSN-SOA.

La présence et l'interaction entre eux de ces différents éléments et modules sur un noeud permet de distribuer des traitements dans le cadre d'un service de fusion. Il permet donc de réduire les coûts en communication que nécessite un procédé centralisé dans lequel toutes les données sont rapatriées sur les noeuds passerelle.

Les modules 43, 45, 46, 40 sont en relation avec une pile WSN-SOA, elle-même en liaison avec le système d'exploitation TinyOS.

Ce procédé offre une grande tolérance aux pannes. Dans le cas de la défaillance ou disparition d'un capteur, le service distribué de fusion peut être reconfiguré totalement ou partiellement afin de modifier le placement des traitements et des différentes modalités utilisées.

Sans sortir du cadre de l'invention, certains ou tous les éléments décrits ci-dessus peuvent être mis en oeuvre dans des réseaux filaires.

Comme il a été défini précédemment pour l'architecture multi-niveaux de la figure 2, les noeuds maîtres sont généralement des équipements avec des capacités supérieures en termes de traitement, de connectivité et d'autonomie, tels que des dispositifs embarquant un système d'exploitation GNU/Linux ou encore une machine virtuelle Java. Dans ces environnements, les capacités en termes de traitement permettent l'utilisation de mécanismes de déploiement de tâches existants. Lorsque une machine virtuelle Java est disponible, des socles logiciels comme OSGi sont particulièrement bien adaptés, car ils permettent d'effectuer des mises à jour sans redémarrer le système et de gérer le cycle de vie des tâches déployées.

Le rôle des « noeuds maîtres » est de recueillir les informations du traitement distribué déployé dans le réseau RCS et de le présenter comme une fonctionnalité de haut niveau au système d'information, en masquant la complexité sous-jacente.

Le système de déploiement pouvant être mis en oeuvre sur un « noeud maître » est composé, par exemple, des modules ayant les fonctionnalités élémentaires représentées à la figure 10 :
51 - Dépôt des fichiers maîtres (en anglais, Task master repository) : ce module stocke les différents « fichiers maîtres » contenant chacun des tâches à déployer. Ces fichiers sont déposés par les services de type Web Services hébergés ou déployés sur le « noeud maître ».
52 - Module de prétraitement des tâches (en anglais, Tasks pre-processor) : ce module prépare chacune des tâches stockées dans le dépôt des fichiers maîtres 51 afin de qu'ils soient déployés plus tard par le gestionnaire de déploiement de tâches 56. Ce module peut par exemple « binariser » les scripts dans un format adéquat, pré-allouer la mémoire en utilisant le module de gestion de la mémoire 53 et spécifier l'adressage des services en utilisant le module de gestion des services 54.
53 - Module de gestion de la mémoire (en anglais, Memory Manager) : ce module peut être utilisé pour allouer la mémoire utilisée par les tâches dans le cadre de l'utilisation de noeuds capteurs ne supportant pas l'allocation dynamique de mémoire. Dans ce dernier cas, une zone mémoire, connue de ce module, a été pré-allouée sur les noeuds capteurs.
54 - Annuaire global de services (en anglais, Global Service Registry) : ce module tient à jour une liste des noeuds et de leurs services et permet de transformer l'adressage des services qui était global dans le « fichier maître » en adressage dédié dans les tâches déployées.
55 - Module de localisation des noeuds (en anglais, Node Locator) : ce module a en charge de maintenir les informations relatives à la position de noeuds. Il assiste le gestionnaire de déploiement des tâches dans le déploiement, lui indiquant lorsque nécessaire sur quel capteur un tâche doit être déployée.
56 - Gestionnaire de déploiement de tâches (en anglais, Tasks Deployment manager) : ce module réalise le déploiement d'une tâche sur un capteur en communiquant avec son module homologue présent sur les noeuds capteurs. Notons que le déploiement des tâches peut également se faire de manière épidémique dans certains cas.
57 -Module passerelle entre les services (en anglais, Service Gateway) : ce module permet, une fois le service distribué de fusion déployé dans le RCS, au service de plus haut niveau de communiquer avec celui-ci de manière bidirectionnelle. Le module passerelle a notamment pour fonction de s'assurer de l'interopérabilité entre les tâches s'exécutant sur des noeuds capteurs Ni ayant des capacités de traitement limitées et des services ou tâches s'exécutant sur des noeuds non contraints ou sur un système d'information.
   Le module passerelle 57 est en liaison avec le module de communication orienté services 47 qui peut être une pile WSN-SOA et les services Web 50.
58 - Un module de stockage pour les tâches prétraitées (tâches qui sont traitées en amont du système selon l'invention) peut être disposé en amont du module de médiation 56 dans le cas où les tâches exécutées sur le noeud maître proviennent de modules extérieurs au système selon l'invention.
59 - Un module de communication orientée services, équivalent au module 47 pour des « noeuds maîtres ».

Le procédé et les équipements disposés au niveau des noeuds peuvent être également utilisés dans le cadre de besoins en orchestration, c'est-à-dire lorsqu'un ou plusieurs noeuds maîtres imposent et gèrent le déroulement d'actions au niveau des noeuds capteurs d'un réseau. Par exemple, on peut avoir besoin que la détection d'une présence par un capteur déclenche l'allumage d'une lumière commandée par un autre capteur. En d'autres termes, ce procédé s'applique à des réseaux composés d'entités à très faibles capacités pouvant aussi bien jouer un rôle de capteur transformant les phénomènes physiques en signaux électriques ou d'effecteur permettant de transformer des signaux électriques en phénomènes physiques.

La partie suivante de la description illustre la manière dont des services distribués de fusion peuvent être déployés sur différents type de noeuds, de préférence des noeuds à capacité limitée. L'exemple qui suit va utiliser la coordination par une entité maîtresse d'un enchaînement d'appels à différents services généralement distribués dans le réseau qui se nomme « orchestration » et au comportement commun et complémentaire entre les services intervenant dans un traitement distribué, sans qu'un seul noeud soit coordinateur se nomme « chorégraphie ».

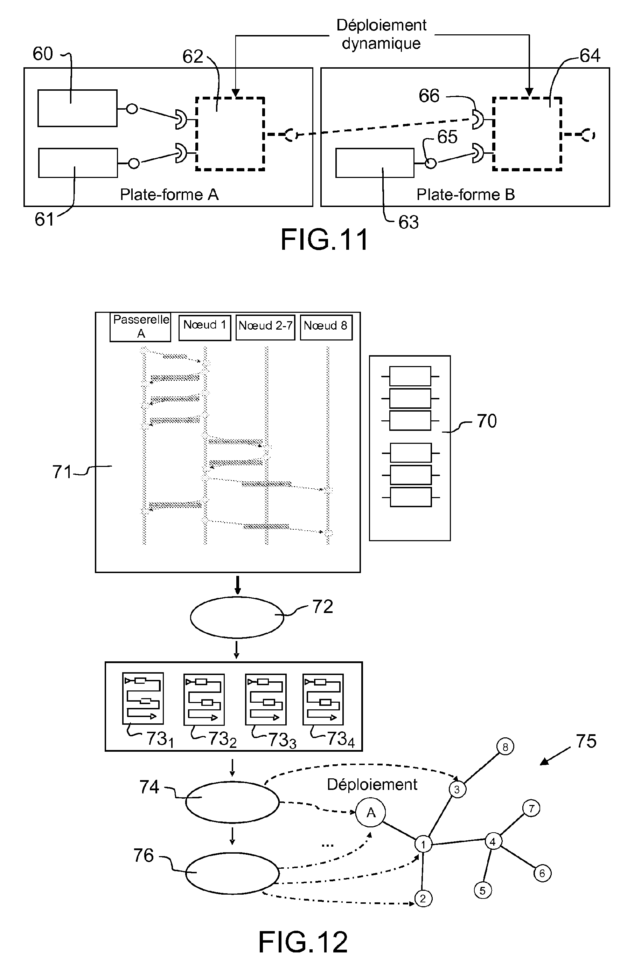

La figure 11 montre un exemple de déploiement dynamique d'un système de fusion distribué simple :

Chaque noeud de faible capacité A et B exécute un gestionnaire de déploiement de tâches 40 et un module de stockage 41 avec des composants déployés par défaut dont font partie les « services élémentaires » que l'on souhaite pouvoir utiliser. Par exemple le noeud A comprend un système de positionnement du noeud 60, un système de détection 61 Le noeud B comprend un algorithme de fusion 63. Les ronds 65 symbolisent une fonctionnalité mise à disposition des autres composants locaux (lorsqu'ils sont représentés à l'intérieur du noeud) ou exposée en tant que service à d'autres noeuds (lorsqu'ils sont représentés à l'extérieur). Les crochets ou demi-lune 66 symbolisent qu'une fonctionnalité est requise par un composant. Les traits relient les fonctionnalités fournies et requises. Les figures en pointillés symbolisent les nouveaux composants et relations qui sont le résultat du déploiement dynamique.

Dans cet exemple de déploiement dynamique de traitement distribué, deux nouvelles tâches sont déployées : sur le noeud A, une nouvelle tâche de détection de cible 62 utilise les fonctionnalités de détection et de positionnement existantes et expose sa fonctionnalité comme un nouveau service qui est disponible sur requête à tous les autres noeuds ; sur le noeud B, une nouvelle tâche de détection de cible distribuée 64 utilise le module 63 et fait appel au service distant de détection de cible 62. Son résultat es exposé au reste du réseau comme un nouveau service qui masque la complexité du fonctionnement distribué sous-jacent.

Le même exemple avec des noeuds à plus fortes capacités peut utiliser des technologies existantes telles qu'OSGi pour le déploiement à chaud de nouveaux composants et la gestion de leur cycle de vie et de mécanismes additionnels de communication comme le service précité DPWS pour exposer les fonctionnalités en tant que services afin de les découvrir et consommer à partir d'autres noeuds.

La figure 12 décrit le procédé complet, depuis la phase de conception du traitement distribué jusqu'au déploiement sur le réseau de noeuds à capacités hétérogènes. Cette partie décrit un des mécanismes possibles pour adresser le déploiement de traitements distribués de fusion sur un système hétérogène combinant les noeuds à capacité limitée et des noeuds réseau RCS. L'approche choisie met en avant l'interopérabilité avec les standards et outils existants. La référence 71 représente un schéma d'orchestration, c'est-à-dire un exemple d'enchaînement de tâches à exécuter sur différents noeuds 1, ...8 accessibles via une passerelle. L'outil 71 permet notamment d'élaborer une description du comportement du traitement distribué de façon globale en partant d'une librairie de fonctions basiques 70 et d'un module 72 transformant ladite description en un ensemble de tâches individuelles destinées à être déployées sur chacun des capteurs Ni. Ainsi le système de description globale du traitement distribué et la librairie de fonctions basiques permettent de définir des tâches destinées à des noeuds ayant des capacités de traitement hétérogènes et le module de déploiement associé 74 permet de déployer les tâches individuelles générées 73₁, 73₂, 73₃, 73₄ sur des noeuds à capacités hétérogènes par exemple 73₁ sur A, 73₂, 73₃, 73₄ sur 1, 2, 3, lesdits noeuds communiquant avec la passerelle de services 57

La première étape consiste à décrire le comportement du traitement distribué en partant de la librairie de fonctions basiques 70 encapsulant des fonctionnalités prédéfinies, que ce soit :
- Pour des noeuds à faibles capacités, par exemple, moyenne, détection de seuil...
- Pour des noeuds à plus fortes capacités, par exemple transformée de Fourrier rapide FFT, opérations sur bases de données.

Ce comportement est décrit en utilisant des outils graphiques 70 existant ou adaptés pour la définition de chorégraphie et orchestrations.

Une fois le traitement défini, les fichiers de sortie au format XML sont lus et traits par un compilateur 72 qui, en se basant sur la librairie de composants 70, crée tâches individuelles 73₁, 73₂, 73₃, 73₄ pour chaque noeud, par exemple, un script pour les noeuds à faibles capacités et un paquetage ou en anglo-saxon bundle OSGi pour les moins contraints.

Une console 74 permet ensuite de gérer le processus de déploiement sur le réseau 75 de noeuds choisi.

Un module de supervision et de gestion des tâches déployées 76 permet de simuler, tester, superviser et reconfigurer l'exécution des tâches déployées sur les noeuds capteurs à partir de la description du comportement global du traitement distribué 71.

Le procédé selon l'invention permet avantageusement de déployer sur un ensemble de noeuds capteurs des traitements pouvant collaborer entre eux afin de créer un service distribué de fusion de données. Le traitement déployé dans chaque noeud est un enchaînement de différentes fonctions nommées « tâches ». Il est exposé au reste des noeuds comme un service. Le comportement global de l'ensemble des capteurs, c'est-à-dire la succession des échanges entre les différentes tâches de chaque noeud se nomme « traitement distribué. Son résultat est présenté comme un service de haut niveau fourni par un seul macrocapteur. Ceci permettant la mise en oeuvre d'une architecture multi-niveaux distribués pour la fusion de données.

Le procédé selon l'invention offre notamment la possibilité :
- de décrire les tâches attribuées aux noeuds capteurs en utilisant des primitives dédiées pour la fusion de données,
- de déployer et exécuter ces tâches sur les noeuds capteurs sans avoir besoin de réinitialiser les noeuds,
- de supporter la collaboration des tâches entre elles en utilisant une approche orientée service,
- de distribuer des traitements de fusion de données impliquant la collaboration de noeuds de réseau RCS en utilisant une approche orientée services,
- de s'interopérer avec des approches orientées services existantes du monde IP ou d'autres mondes, dans le cadre d'une architecture multiniveaux de traitements distribués collaboratifs pour la fusion de données.

## Revendications

1. Système permettant le déploiement dynamique et/ou la création de tâches au sein d'un réseau comportant au moins un noeud maître (0) et plusieurs noeuds capteurs Ni ayant des capacités de traitement limitées, le réseau supportant un logiciel de communication exposant les fonctionnalités de chaque noeud capteur comme des services sur ledit réseau et un mécanisme de médiation permettant de mettre en relation les services de différents noeuds capteurs dudit réseau **caractérisé en ce qu'**il comporte au moins les éléments suivants :
Au niveau d'un noeud Ni de faible capacité du réseau :
- Un gestionnaire de déploiement de tâches (40) ou de traitements,
- Un module de stockage (41) desdites tâches reçues via un gestionnaire de déploiement des tâches (40),
- Un module interpréteur (43) desdites tâches, ledit module utilisant des opérations basiques (44) présentes dans ledit noeud,
- Une interface avec des capteurs locaux (45),
- Un module de communication réseau orienté services (47), exposant les fonctionnalités internes à d'autres noeuds du réseau à travers des interfaces d'entrée et de sortie et permettant de commander lesdits services sur d'autres noeuds,
- Un module de médiation globale (46) mettant en relation les tâches des différents noeuds, fournissant et consommant un ou plusieurs desdits services à travers le module de communication (47) orienté services,
lesdits différents noeuds capteurs au sein dudit réseau exécutant chacun une ou plusieurs des tâches déployées spécifiques,
Au niveau d'un noeud maître utilisé au niveau de la phase de déploiement :
- Un gestionnaire de déploiement de tâches (56).

2. Système selon la revendication 1, **caractérisé en ce que** le module des opérations basiques (44) d'un noeud Ni du réseau comporte au moins une opération permettant à une tâche exécutée sur ledit noeud de créer dynamiquement un nouveau service qui sera exposé à travers ledit réseau.

3. Système selon l'une des revendications 1 ou 2, **caractérisé en ce que** ledit module de médiation globale des services (46) d'un noeud Ni du réseau comporte au moins un module de découverte des nouveaux services offerts par un ou plusieurs des autres noeuds du réseau.

4. Système pour la création dynamique de services ou de traitements distribués selon l'une des revendications 1 à 3, **caractérisé en ce qu'**il comporte un outil (71) permettant d'élaborer la description du comportement d'un traitement distribué de façon globale en partant d'une librairie de fonctions basiques (70) et un module (72) transformant ladite description en un ensemble de tâches individuelles (73₁), (73₂), (73₃), (73₄),destinées à être déployées sur chacun des noeuds capteurs Ni.

5. Système selon l'une des revendications 1 à 4, **caractérisé en ce qu'**au moins un noeud comporte une passerelle de services (57) adaptée à assurer l'interopérabilité entre les tâches s'exécutant sur des noeuds capteurs Ni ayant des capacités de traitement limitées et des services ou tâches s'exécutant sur des noeuds non contraints ou sur un système d'information.

6. Système selon les revendications 4 et 5 **caractérisé en ce que** le système de description globale du traitement distribué (71) et la librairie de fonctions basiques (70) permettent de définir des tâches destinées à des noeuds ayant des capacités de traitement hétérogènes, et le module de déploiement associé (74) permet de déployer des tâches individuelles générée (73₁), (73₂), (73₃), (73₄), sur des noeuds à capacités hétérogènes, communiquant à travers ladite passerelle de services (57).

7. Système selon l'une des revendications 4 ou 6, **caractérisé en ce qu'**il comporte un module de supervision et de gestion des tâches déployées (76), permettant de simuler, tester, superviser et reconfigurer l'exécution des tâches déployées sur les noeuds capteurs à partir de la description du comportement global du traitement distribué (71).

8. Système selon l'une des revendications 1 à 7, **caractérisé en ce que** le module de communication (47) est une pile de type WSN-SOA.
